(19) Europäisches Patentamt
European Patent Office
Office européen des brevets

(11) EP 4 415 095 A1

(12) EUROPEAN PATENT APPLICATION

(43) Date of publication:
**14.08.2024 Bulletin 2024/33**

(21) Application number: **23194724.3**

(22) Date of filing: **31.08.2023**

(51) International Patent Classification (IPC):
***H01M 10/0525** (2010.01)* ***H01M 10/0568** (2010.01)*

(52) Cooperative Patent Classification (CPC):
**H01M 10/0568; H01M 10/0525;** H01M 4/525; H01M 4/5825; H01M 4/583

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **08.02.2023 KR 20230016933**

(71) Applicant: **Samsung SDI Co., Ltd.**
**Yongin-si, Gyeonggi-do 17084 (KR)**

(72) Inventors:
- **KOH, Sujeong**
  **17084 Yongin-si (KR)**
- **SEO, Jinah**
  **17084 Yongin-si (KR)**
- **LIM, Jin-Hyeok**
  **17084 Yongin-si (KR)**
- **CHO, Erang**
  **17084 Yongin-si (KR)**
- **KIM, Yunhee**
  **17084 Yongin-si (KR)**

(74) Representative: **Russell, Tim et al**
**Venner Shipley LLP**
**200 Aldersgate**
**London EC1A 4HD (GB)**

# (54) ELECTROLYTE FOR RECHARGEABLE LITHIUM BATTERY AND RECHARGEABLE LITHIUM BATTERY COMPRISING THE SAME

(57) Disclosed are electrolyte for a rechargeable lithium battery and rechargeable lithium battery comprising the same, the electrolyte comprising a non-aqueous organic solvent, a lithium salt, and a sodium imide salt. Details of the sodium imide salt are as described in the specification.

EP 4 415 095 A1

## Description

## BACKGROUND OF THE INVENTION

### (a) Field of the Invention

This disclosure relates to an electrolyte for a rechargeable lithium battery and a rechargeable lithium battery comprising the same.

### (b) Description of the Related Art

A rechargeable lithium battery may be recharged and has three or more times higher energy density per unit weight than a conventional lead storage battery, nickelcadmium battery, nickel hydrogen battery, nickel zinc battery and the like, and may be highly charged and thus, is commercially manufactured for a laptop, a cell phone, an electric tool, an electric bike, and the like, and researches on improvement of additional energy density have been actively made.

Such a rechargeable lithium battery is manufactured by injecting an electrolyte into a battery cell, which comprises a positive electrode comprising a positive electrode active material capable of intercalating/deintercalating lithium ions and a negative electrode comprising a negative electrode active material capable of intercalating/deintercalating lithium ions.

One of the recent development directions of the rechargeable lithium battery is rapid charging. However, if the rechargeable lithium battery is rapidly charged, lithium dendrite is precipitated on the negative electrode surface (specifically, on the interface of the negative electrode and the electrolyte), causing problems of deteriorating cycle-life characteristics and/or increasing resistance of the rechargeable lithium battery.

Accordingly, an electrolyte improving rapid charging performance as well as minimizing the deterioration of cycle-life characteristics and/or the resistance increase of the rechargeable lithium battery.

## SUMMARY OF THE INVENTION

An aspect according to one or more embodiments is directed toward an electrolyte for a rechargeable lithium battery that improves rapid charging performance while minimizing deterioration of cycle-life characteristics and/or increase in resistance.

An aspect according to one or more embodiments is directed toward a rechargeable lithium battery with improved rapid charging performance while minimizing deterioration of cycle-life characteristics and/or increase in resistance by applying the electrolyte for a rechargeable lithium battery.

Embodiments of the present disclosure provides an electrolyte for a rechargeable lithium battery comprising a non-aqueous organic solvent, a lithium salt, and a sodium imide salt, wherein a content of the sodium imide salt is greater than or equal to about 0.2 wt% based on 100 wt% of the electrolyte for a rechargeable lithium battery.

The content of the sodium imide salt may be about 0.2 to about 1.0 wt% based on 100 wt% of the electrolyte for a rechargeable lithium battery.

The content of the sodium imide salt may be about 0.25 to about 0.3 wt% based on 100 wt% of the electrolyte for a rechargeable lithium battery.

The sodium imide salt may be NaFSI, NaTFSI, NaFTFSI (sodium (fluorosulfonyl) (trifluoromethanesulfonyl) imide), or a combination thereof.

The non-aqueous organic solvent may comprise a carbonate-based, ester-based, ether-based, ketone-based, alcohol-based, or aprotic solvent.

The non-aqueous organic solvent may comprise a carbonate-based solvent in which cyclic carbonate and linear carbonate are mixed in a volume ratio of about 5:95 to about 50:50.

The cyclic carbonate may comprise ethylene carbonate (EC) and the linear carbonate may comprise ethylmethyl carbonate (EMC) and dimethyl carbonate (DMC).

The lithium salt may comprise one or two or more selected from $LiPF_6$, $LiBF_4$, LiDFOP, LiDFOB, $LiPO_2F_2$, $LiSbF_6$, $LiAsF_6$, $LiN(SO_2C_2F_5)_2$, $Li(CF_3SO_2)_2N$, LiN(SOaCzFs)z, $Li(FSO_2)_2N$ (lithium bis(fluorosulfonyl)imide, LiFSI), $LiC_4F_9SO_3$, $LiClO_4$, $LiAlO_2$, $LiAlCl_4$, $LiN(C_xF_{2x+1}SO_2)(C_yF_{2y+1}SO_2)$ (where x and y are natural numbers, for example integers from 1 to 20), LiCl, LiI, and $LiB(C_2O_4)_2$ (lithium bis(oxalato) borate: LiBOB).

A concentration of the lithium salt in the electrolyte for a rechargeable lithium battery may be about 1.0 M to about 2.0 M.

Another embodiment provides a positive electrode comprising a positive electrode active material; a negative electrode comprising a negative electrode active material; and the electrolyte.

The positive electrode active material may comprise a lithium nickel-based composite oxide represented by

Chemical Formula 1:

[Chemical Formula 1] $Li_{a1}Ni_{x1}M^1_{y1}M^2_{z1}O_{2-b1}X_{b1}$

In Chemical Formula 1, 0.9≤a1≤1.2, 0.7≤x1≤1, 0≤y1≤0.2, 0≤z1≤0.2, 0.9≤x1+y1+z1≤1.1, and 0≤b1≤0.1; $M^1$ and $M^2$ are each independently one or more elements selected from Al, B, Ba, Ca, Ce, Co, Cr, Cu, Fe, Mg, Mn, Mo, Nb, Si, Sr, Ti, V, W, and Zr; and X is one or more elements selected from F, P, and S.

The negative electrode active material may comprise at least one of graphite and a Si composite.

The Si composite may comprise a core comprising Si particles and amorphous carbon.

The core comprising the Si particles may comprise one or more of a Si-C composite, $SiO_k$ ($0 < k \leq 2$), and a Si alloy.

The Si-C composite may comprise a core comprising Si particles and amorphous carbon.

Pores may be comprised in the central portion of the core.

A radius of the central portion corresponds to 30% to 50% of a radius of the SiC composite, and an average particle diameter of the Si particles may be about 10 nm to about 200 nm.

The central portion does not comprise amorphous carbon, and the amorphous carbon may exist in the surface portion alone of the negative electrode active material.

The negative electrode active material may further comprise crystalline carbon.

An electrolyte for a rechargeable lithium battery according to embodiments may form a lithophilic film on the surface of the negative electrode and minimize precipitates at the interface between the negative electrode and the electrolyte by adding an appropriate amount of sodium imide salt. Accordingly, it is possible to realize a rechargeable lithium battery with improved rapid charging performance while suppressing deterioration of cycle-life characteristics and/or increase in resistance.

## BRIEF DESCRIPTION OF THE DRAWINGS

FIG. 1 is a schematic view showing a rechargeable lithium battery according to embodiments of the present invention.

## DETAILED DESCRIPTION OF THE EMBODIMENTS

Hereinafter, a rechargeable lithium battery according to embodiments of the present invention will be described in detail with reference to the accompanying drawings. However, these embodiments are exemplary, the present invention is not limited thereto and the present invention is defined by the scope as claimed in claims.

Unless otherwise defined herein, particle diameter may be the average particle diameter. Also, by particle size is meant the average particle size (D50), which is the diameter of the particles in the particle size distribution that have a cumulative volume of 50 volume%. The average particle size may be measured by methods well known in the art, for example, by a particle size analyzer, or by a Transmission Electron Microscope photograph or a Scanning Electron Microscope photograph. Alternatively, measurements can be made with a device that uses dynamic light-scattering, and the data can be analyzed to count the number of particles for each particle size range, which can then be calculated to obtain an average particle diameter (D50) value. Alternatively, it can be measured using a laser diffraction method. When measuring by laser diffraction, more specifically, the particles to be measured are dispersed in a dispersing medium and introduced into a commercially available laser diffraction particle size measurement device (e.g., Microtrac MT 3000), irradiated with ultrasonic waves of approximately 28 kHz at a power of 60 W, and the average particle size (D50) based on 50% of the particle size distribution in the measurement device can be calculated.

Herein, as an example of the rechargeable lithium battery, a cylindrical rechargeable lithium battery will be exemplarily described. FIG. 1 schematically illustrates the structure of a rechargeable lithium battery according to embodiments. Referring to FIG. 1, a rechargeable lithium battery 100 according to embodiments comprises a battery cell comprising a positive electrode 114, a negative electrode 112 facing the positive electrode 114, a separator 113 between the positive electrode 114 and the negative electrode 112, and an electrolyte (not shown) impregnating the positive electrode 114, the negative electrode 112, and the separator 113, a battery case 120 housing the battery cell, and a sealing member 140 sealing the battery case 120.

In embodiments of the present invention, an electrolyte for a rechargeable lithium battery comprises a non-aqueous organic solvent, a lithium salt, and a sodium imide salt, wherein a content of the sodium imide salt is greater than or equal to about 0.2 wt% based on 100 wt% of the electrolyte for a rechargeable lithium battery.

If a sodium imide salt is not added as the additive of the electrolyte of the rechargeable lithium battery, cations (i.e., $Li^+$) of the lithium salt are electrodeposited and form sharp lithium dendrite on the surface of the negative electrode, resultantly, deteriorating cycle-life and safety of the rechargeable lithium battery.

On the other hand, if a sodium imide salt is added as the additive of the electrolyte of the rechargeable lithium

battery according to embodiments, the sodium imide salt and the lithium salt simultaneously exist inside the rechargeable lithium battery. Accordingly, cations (i.e., $Na^+$ and $Li^+$) of the two salts are simultaneously electrodeposited on the negative electrode surface, forming a lithophilic film with a uniform thickness simultaneously comprising $Na^+$ and $Li^+$ on the negative electrode surface; and a LiF inorganic film.

The lithophilic film with a uniform thickness simultaneously comprising $Na^+$ and $Li^+$ may suppress the formation of sharp lithium dendrite and simultaneously, minimize the precipitates on the interface of the negative electrode and the electrolyte. In addition, the LiF inorganic film may lower a resistance increase rate of the negative electrode.

In addition, the sodium imide salt, compared with the sodium phosphate salt, has an excellent effect of forming the lithophilic film. Specifically, the sodium imide salt comprises an electron-donating group, compared with the sodium phosphate salt comprising the corresponding group, has an excellent effect of stabilizing phosphorus pentafluoride (PF) and the like.

However, if a content of the sodium imide salt may be about 0.2 wt% based on about 100 wt% of the electrolyte for the rechargeable lithium battery, the effect may be insignificant. Accordingly, the electrolyte for a rechargeable lithium battery according to embodiments comprises a sodium imide salt at an appropriate concentration (i.e., about 0.2 wt% or more) as the additive, thereby realizing a rechargeable lithium battery with improved safety without deteriorating the rapid charging performance. On the other hand, based on about 100 wt% of the electrolyte for a rechargeable lithium battery, an upper limit of the content of the sodium imide salt is not particularly limited but may be about 1.0 wt% or less, about 0.5 wt% or less, or about 0.3 wt% or less.

For example, based on 100 wt% of the electrolyte for a rechargeable lithium battery, the content of the sodium imide salt may be about 0.2 to about 1.0 wt%, or about 0.25 to about 0.3 wt%. If the exemplary range is satisfied, the lithophilic film is formed at an appropriate level on the negative electrode surface, and the precipitates may be minimized on the interface of the negative electrode and the electrolyte. Accordingly, a rechargeable lithium battery with improved rapid charging performance, while suppressing the cycle-life characteristic deterioration and/or the resistance increase, may be realized.

The sodium imide salt may be NaFSI (sodium bis (fluorosulfonyl) imide, sodium bis (fluorosulfonyl) imide), NaTFSI (sodium bis (trifluorosulfonyl) imide, sodium bis (trifluorosulfonyl) imide)), NaFTFSI (sodium (fluorosulfonyl) (trifluoromethanesulfonyl) imide), or a combination thereof. For example, the sodium imide salt may be any one of the two compounds.

The non-aqueous organic solvent serves as a medium for transmitting ions taking part in the electrochemical reaction of a battery.

The non-aqueous organic solvent may comprise a carbonate-based, ester-based, ether-based, ketone-based, alcohol-based, or aprotic solvent.

The carbonate-based solvent may comprise ethylmethyl carbonate (EMC), dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. The ester-based solvent may comprise methyl acetate, ethyl acetate, n-propyl acetate, t-butyl acetate, methylpropionate, ethylpropionate, propylpropionate, decanolide, mevalonolactone, caprolactone, and the like. The ether-based solvent may comprise dibutyl ether, tetraglyme, diglyme, dimethoxyethane, 2-methyltetrahydrofuran, tetrahydrofuran, and the like. The ketone-based solvent may comprise cyclohexanone and the like. The alcohol-based solvent may comprise ethyl alcohol, isopropyl alcohol, and the like, and examples of the aprotic solvent comprise nitriles such as R-CN (wherein R is a C2 to C20 linear, branched, or cyclic hydrocarbon group, a double bond, an aromatic ring, or an ether bond), amides such as dimethylformamide, dioxolanes such as 1,3-dioxolane, sulfolanes, and the like.

The non-aqueous organic solvent may be used alone or in a mixture. If the organic solvent is used in a mixture, their mixing ratio may be controlled in accordance with a desirable battery performance.

The carbonate-based solvent is prepared by mixing a cyclic carbonate and a linear carbonate . The cyclic carbonate and linear carbonate are mixed together in a volume ratio of about 5:95 to about 50:50. If the mixture is used as an electrolyte, it may have enhanced performance.

Specifically, ethylene carbonate (EC) may be used as the cyclic carbonate, and ethylmethyl carbonate (EMC) and dimethyl carbonate (DMC) may be used as the linear carbonate .

More specifically, the non-aqueous organic solvent may comprise a carbonate-based solvent in which ethylene carbonate (EC), ethylmethyl carbonate (EMC), and dimethyl carbonate (DMC) are mixed. For example, the carbonate-based solvent in which ethylene carbonate (EC), ethylmethyl carbonate (EMC), and dimethyl carbonate (DMC) are mixed is mixed in a volume ratio of EC:EMC:DMC = about 1:0.5:5 to about 5:3:10, which may improve performance of the electrolyte.

The non-aqueous organic solvent may further comprise an aromatic hydrocarbon-based solvent as well as the carbonate-based solvent. The carbonate-based solvent and aromatic hydrocarbon-based solvent may be mixed together in a volume ratio of about 1:1 to about 30:1.

The aromatic hydrocarbon-based solvent may be an aromatic hydrocarbon-based compound represented by

Chemical Formula 3.

[Chemical Formula 3]

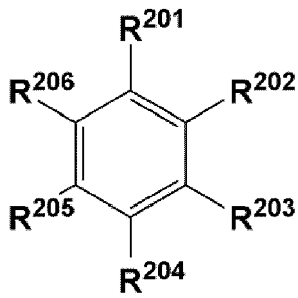

In Chemical Formula 3, $R^{201}$ to $R^{206}$ are the same or different and are selected from hydrogen, a halogen, a C1 to C10 alkyl group, a haloalkyl group, and a combination thereof.

Specific examples of the aromatic hydrocarbon-based solvent may be selected from benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, and a combination thereof.

The electrolyte may further comprise vinylene carbonate, vinyl ethylene carbonate, or an ethylene-based carbonate-based compound of Chemical Formula 4 to improve cycle-life of a battery as a cycle life-enhancing additive.

[Chemical Formula 4]

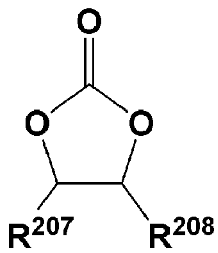

In Chemical Formula 4, $R^{207}$ and $R^{208}$ are the same or different and are selected from hydrogen, a halogen, a cyano group (CN), a nitro group ($NO_2$), or a C1 to C5 fluoroalkyl group, provided that at least one of $R^{207}$ and $R^{208}$ is a halogen, a cyano group (CN), a nitro group ($NO_2$), or a C1 to C5 fluoroalkyl group, and $R^{207}$ and $R^{208}$ are not simultaneously hydrogen.

Examples of the ethylene carbonate-based compound comprise difluoro ethylenecarbonate, chloroethylene carbonate, dichloroethylene carbonate, bromoethylene carbonate, dibromoethylene carbonate, nitroethylene carbonate, cyanoethylene carbonate or fluoroethylene carbonate. The amount of the additive for improving cycle-life may be used within an appropriate range.

The lithium salt is dissolved in a non-aqueous organic solvent, supplies a battery with lithium ions, basically operates the rechargeable lithium battery, and improves transportation of the lithium ions between positive and negative electrodes. Examples of the lithium salt comprise one or more selected from $LiPF_6$, $LiBF_4$, LiDFOP, LiDFOB, $LiPO_2F_2$, $LiSbF_6$, $LiAsF_6$, $LiN(SO_2C_2F_5)_2$, $Li(CF_3SO_2)_2N$, $LiN(SO_3C_2F_5)_2$, $Li(FSO_2)_2N$ (lithium bis(fluorosulfonyl)imide: LiFSI), $LiC_4F_9SO_3$, $LiClO_4$, $LiAlO_2$, $LiAlCl_4$, $LiN(C_xF_{2x+1}SO_2)(C_yF_{2y+1}SO_2)$, (where x and y are natural numbers, for example an integer of 1 to 20), LiCl, LiI and $LiB(C_2O_4)_2$ (lithium bis(oxalato) borate; LiBOB). The lithium salt may be used in a concentration ranging from about 0.1 M to about 2.0 M. If the lithium salt is included at the above concentration range, an electrolyte may have excellent performance and lithium ion mobility due to optimal electrolyte conductivity and viscosity.

Another embodiment provides a rechargeable lithium battery comprising a positive electrode comprising a positive electrode active material; a negative electrode comprising a negative electrode active material; and the aforementioned electrolyte.

The positive electrode comprises a positive electrode current collector and a positive electrode active material layer on the positive electrode current collector, and the positive electrode active material layer comprises a positive electrode active material.

The positive electrode active material may comprise lithiated intercalation compounds that reversibly intercalate and deintercalate lithium ions.

Specifically, at least one composite oxide of lithium and a metal of cobalt, manganese, nickel, or a combination thereof may be used.

The composite oxide having a coating layer on the surface thereof may be used, or a mixture of the composite oxide and the composite oxide having a coating layer may be used. The coating layer may comprise a coating element compound of an oxide or hydroxide of a coating element, oxyhydroxide of a coating element, oxycarbonate of a coating element, or hydroxycarbonate of a coating element. The compound for the coating layer may be either amorphous or crystalline. The coating element comprised in the coating layer may be Mg, Al, Co, K, Na, Ca, Si, Ti, V, Sn, Ge, Ga, B, As, Zr, or a mixture thereof. The coating process may comprise any conventional processes as long as it does not cause any side effects on the properties of the positive electrode active material (e.g., spray coating, dipping), which is well known to persons having ordinary skill in this art, so a detailed description thereof is omitted.

Specifically, the positive electrode active material may comprise a lithium nickel-based composite oxide represented by Chemical Formula 1:

[Chemical Formula 1] $Li_{a1}Ni_{x1}M^1_{y1}M^2_{z1}O_{2-b1}X_{b1}$

In Chemical Formula 1, $0.9\leq a1\leq 1.2$, $0.7\leq x1\leq 1$, $0\leq y1\leq 0.2$, $0\leq z1\leq 0.2$, $0.9\leq x1+y1+z1\leq 1.1$, and $0\leq b1\leq 0.1$; $M^1$ and $M^2$ are each independently one or more elements selected from Al, B, Ba, Ca, Ce, Co, Cr, Cu, Fe, Mg, Mn, Mo, Nb, Si, Sr, Ti, V, W, and Zr; and X is one or more elements selected from F, P, and S.

In Chemical Formula 1, $0.75\leq x1 \leq 1$, $0\leq y1 \leq 0.18$, and $0\leq z1 \leq 0.18$; $0.85\leq x1\leq 1$, $0\leq y1 \leq 0.15$, and $0\leq z1 \leq 0.15$; or $0.9\leq x1 \leq 1$, $0\leq y1 \leq 0.1$, and $0\leq z1 \leq 0.1$.

For example, the positive electrode active material may comprise a lithium nickel-based composite oxide represented by Chemical Formula 2. The compound represented by Chemical Formula 2 may be referred to as a lithium nickel cobalt-based composite oxide:

[Chemical Formula 2] $Li_{a2}Ni_{x2}Co_{y2}M^3_{z2}O_{2-b2}X_{b2}$

In Chemical Formula 2, $0.9\leq a2\leq 1.8$, $0.7\leq x2<1$, $0<y2\leq 0.2$, $0\leq z2\leq 0.2$, $0.9\leq x2+y2+z2\leq 1.1$, and $0\leq b2\leq 0.1$, $M^3$ is one or more elements selected from Al, B, Ba, Ca, Ce, Cr, Fe, Mg, Mn, Mo, Nb, Si, Sr, Ti, V, W, and Zr, and X is one or more elements selected from F, P, and S.

In Chemical Formula 2, $0.75\leq x2\leq 0.99$, $0\leq y2\leq 0.15$, and $0\leq z2\leq 0.15$; $0.85\leq x2\leq 0.99$, $0.01\leq y2\leq 0.15$, and $0.01\leq z2\leq 0.15$; or $0.9\leq x2\leq 0.99$, $0.01\leq y2\leq 0.1$, and $0.01\leq z2\leq 0.1$.

For example, the positive electrode active material may comprise a lithium nickel-based composite oxide represented by Chemical Formula 3. The compound represented by Chemical Formula 3 may be referred to as lithium nickel-cobalt-aluminum oxide or lithium nickel-cobalt-manganese oxide.

[Chemical Formula 3] $Li_{a3}Ni_{x3}Co_{y3}M^4_{z3}M^5_{w3}O_{2-b3}X_{b3}$

In Chemical Formula 3, $0.9\leq a3\leq 1.8$, $0.7\leq x3\leq 0.98$, $0.01\leq y3\leq 0.19$, $0.01\leq z3\leq 0.19$, $0\leq w3\leq 0.19$, $0.9\leq x3+y3+z3+w3\leq 1.1$, and $0\leq b3\leq 0.1$, $M^4$ is one or more elements selected from Al and Mn, $M^5$ is one or more elements selected from B, Ba, Ca, Ce, Cr, Fe, Mg, Mo, Nb, Si, Sr, Ti, V, W, and Zr, and X is one or more elements selected from F, P, and S.

In Chemical Formula 3, $0.75\leq x3\leq 0.98$, $0\leq y3\leq 0.16$, and $0\leq z3\leq 0.16$; $0.85\leq x3\leq 0.98$, $0.01\leq y3\leq 0.14$, $0.01\leq z3\leq 0.14$, and $0\leq w3\leq 0.14$; or $0.9\leq x3\leq 0.98$, $0.01\leq y3\leq 0.09$, $0.01\leq z3\leq 0.09$, and $0\leq w3\leq 0.09$.

For example, the positive electrode active material may comprise a lithium nickel-based composite oxide represented by Chemical Formula 4. The compound represented by Chemical Formula 4 may be referred to as a cobalt-free lithium nickel-manganese oxide.

[Chemical Formula 4] $Li_{a4}Ni_{x4}Mn_{y4}M^6_{z4}O_{2-b4}X_{b4}$

In Chemical Formula 4, $0.9\leq a2\leq 1.8$, $0.7\leq x4<1$, $0<y4\leq 0.2$, $0\leq z4\leq 0.2$, $0.9\leq x4+y4+z4\leq 1.1$, and $0\leq b4\leq 0.1$ $M^6$ is one or more elements selected from Al, B, Ba, Ca, Ce, Cr, Fe, Mg, Mo, Nb, Si, Sr, Ti, V, W, and Zr, and X is one or more elements selected from F, P, and S.

In the positive electrode active material according to embodiments, the first positive electrode active material may be comprised in an amount of about 50 wt% to about 90 wt%, and the second positive electrode active material is comprised in an amount of about 10 wt% to about 50 wt%, based on the total amount of the first and second positive electrode active materials. The first positive electrode active material may be comprised in, for example, about 60 wt% to about 90 wt%, or about 70 wt% to about 90 wt% and the second positive electrode active material may be comprised in about 10 wt% to about 40 wt%, or about 10 wt% to about 30 wt%. If the content ratio of the first positive electrode active material and the second positive electrode active material is as above, the positive electrode active material comprising the same may realize high capacity, improve mixture density, and exhibit high energy density.

A content of the positive electrode active material may be about 50 wt% to about 99 wt%, about 60 wt% to about 99 wt%, about 70 wt% to about 99 wt%, about 80 wt% to about 99 wt%, or about 90 wt% to about 99 wt% based on a total weight of the positive electrode active material layer.

In embodiments of the present invention, the positive electrode active material layer may optionally comprise a conductive material and a binder. In this case, each content of the conductive material and the binder may be about 1.0 wt% to about 5.0 wt%, based on a total weight of the positive electrode active material layer.

The conductive material is used to impart conductivity to the negative electrode, and any electrically conductive material may be used as a conductive material unless it causes a chemical change in a battery. Examples of the conductive material may comprise a carbon-based material such as natural graphite, artificial graphite, carbon black, acetylene black, ketjen black, carbon fiber, and the like; a metal-based material of a metal powder or a metal fiber comprising copper, nickel, aluminum, silver, and the like; a conductive polymer such as a polyphenylene derivative; or a mixture thereof.

The binder improves binding properties of positive electrode active material particles with one another and with a current collector and examples thereof may be polyvinyl alcohol, carboxylmethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and the like, but are not limited thereto.

Al may be used as the positive electrode current collector, but is not limited thereto.

The negative electrode comprises a negative electrode current collector and a negative electrode active material layer comprising the negative electrode active material on the negative electrode current collector.

The negative electrode active material may be a material that reversibly intercalates/deintercalates lithium ions, a lithium metal, a lithium metal alloy, a material capable of doping and dedoping lithium, or a transition metal oxide.

The material that reversibly intercalates/deintercalates lithium ions comprises carbon materials. The carbon material may be any generally-used carbon-based negative electrode active material in a rechargeable lithium battery. Examples of the carbon material comprise crystalline carbon, amorphous carbon, and a combination thereof. The crystalline carbon may be non-shaped, or sheet, flake, spherical, or fiber shaped natural graphite or artificial graphite. The amorphous carbon may be a soft carbon, a hard carbon, a mesophase pitch carbonized product, fired coke, and the like.

The lithium metal alloy may comprise lithium and a metal selected from Na, K, Rb, Cs, Fr, Be, Mg, Ca, Sr, Si, Sb, Pb, In, Zn, Ba, Ra, Ge, Al, and Sn.

The material capable of doping and dedoping lithium may comprise Si, $SiO_x$ ($0 < x < 2$), a Si-Q alloy (wherein Q is selected from an alkali metal, an alkaline-earth metal, a Group 13 element, a Group 14 element, a Group 15 element, a Group 16 element, a transition metal, a rare earth element, and a combination thereof, and not Si), Sn, $SnO_2$, a Sn-R alloy (wherein R is an alkali metal, an alkaline-earth metal, a Group 13 element, a Group 14 element, a Group 15 element, a Group 16 element, a transition element, a rare earth element, or a combination thereof, and not Sn), and the like. At least one of them may be mixed with $SiO_2$.

The elements Q and R may be selected from Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and combination thereof.

The transition metal oxide may be a vanadium oxide, a lithium vanadium oxide, and the like.

In embodiments, the negative electrode active material may comprise at least one of graphite and a Si composite.

The Si composite may comprise a core comprising Si particles and amorphous carbon, for example, the Si particles may comprise at least one of Si composite, $SiO_x$ ($0 < x \leq 2$), and an Si alloy.

For example, the Si-C composite may comprise a core comprising Si particles and amorphous carbon.

The central portion of the core may comprise pores, and the radius of the central portion may correspond to about 30% to about 50% of the radius of the Si-C composite.

The Si particles may have an average particle diameter of about 10 nm to about 200 nm.

As used herein, the average particle diameter may be a particle size (D50) at a volume ratio of 50% in a cumulative size-distribution curve.

If the average particle diameter of the Si particle is within the above range, volume expansion occurring during

charging and discharging may be suppressed, and a disconnection of a conductive path due to particle crushing during charging and discharging may be prevented.

The Si particle may be comprised in an amount of about 1 wt% to about 60 wt%, for example, about 3 wt% to about 60 wt%, based on a total weight of the Si-C composite.

The central portion may not comprise amorphous carbon, but the amorphous carbon may be present only on the surface portion of the negative active material.

Herein, the surface portion indicates a region from the central portion of the negative active material to the outermost surface of the negative active material.

In addition, the Si particles are substantially uniformly included over the negative active material, that is, present at a substantially uniform concentration in the central portion and the surface portion thereof.

The amorphous carbon may be soft carbon, hard carbon, mesophase pitch carbonized product, calcined coke, or a combination thereof.

The negative electrode active material may further comprise crystalline carbon.

If the negative electrode active material comprises a Si-C composite and crystalline carbon together, the Si-C composite and crystalline carbon may be comprised in the form of a mixture, and in this case, the Si-C composite and crystalline carbon may be included in a weight ratio of about 1:99 to about 50:50. More specifically, the Si-C composite and crystalline carbon may be included in a weight ratio of 3 : 97 to 20 : 80 or 5 : 95 to 20 : 80.

The crystalline carbon may be for example graphite, and more specifically natural graphite, artificial graphite, or a mixture thereof.

The crystalline carbon may have an average particle diameter of about 5 $\mu$m to about 30 $\mu$m.

The amorphous carbon precursor may comprise a coal-based pitch, mesophase pitch, petroleum-based pitch, coal-based oil, petroleum-based heavy oil, or a polymer resin such as a phenol resin, a furan resin, or a polyimide resin.

In the negative electrode active material layer, the negative electrode active material may be included in an amount of about 95 wt% to about 99 wt% based on a total weight of the negative electrode active material layer.

In embodiments, the negative electrode active material layer may comprise a binder, and optionally a conductive material. In the negative electrode active material layer, the amount of the binder may be about 1 wt% to about 5 wt% based on a total weight of the negative electrode active material layer. If it further comprises the conductive material, it may comprise about 90 wt% to about 98 wt% of the negative electrode active material, about 1 wt% to about 5 wt% of the binder, and about 1 wt% to about 5 wt% of the conductive material.

The binder improves binding properties of negative electrode active material particles with one another and with a current collector. The binder may be a non-water-soluble binder, a water-soluble binder, or a combination thereof.

The non-water-soluble binder may be polyvinylchloride, carboxylated polyvinylchloride, polyvinylfluoride, polyurethane, polytetrafluoroethylene, polyvinylidene fluoride, polyethylene, polypropylene, polyamideimide, polyimide, or a combination thereof.

The water-soluble binder may be a rubber-based binder or a polymer resin binder. The rubber-based binder may be selected from a styrene-butadiene rubber, an acrylated styrene-butadiene rubber (SBR), an acrylonitrile-butadiene rubber, an acrylic rubber, a butyl rubber, a fluorine rubber, and a combination thereof. The polymer resin binder may be selected from polytetrafluoroethylene, ethylenepropylene copolymer, polyethyleneoxide, polyvinylpyrrolidone, polyepichlorohydrine, polyphosphazene, polyacrylonitrile, polystyrene, an ethylene propylenediene copolymer, polyvinylpyridine, chlorosulfonatedpolyethylene, latex, a polyester resin, an acrylic resin, a phenolic resin, an epoxy resin, polyvinylalcohol, and a combination thereof.

If the water-soluble binder is used as the negative electrode binder, a cellulose-based compound may be further used to provide viscosity as a thickener. The cellulose-based compound comprises one or more of carboxylmethyl cellulose, hydroxypropylmethyl cellulose, methyl cellulose, or alkali metal salts thereof. The alkali metal may be Na, K, or Li. Such a thickener may be included in an amount of about 0.1 to about 3 parts by weight based on 100 parts by weight of the negative electrode active material.

The conductive material is included to provide electrode conductivity and any electrically conductive material may be used as a conductive material unless it causes a chemical change. Examples thereof may be a carbon-based material such as natural graphite, artificial graphite, carbon black, acetylene black, ketjen black, carbon fiber and the like; a metal-based material such as a metal powder or a metal fiber and the like of copper, nickel, aluminum, silver, and the like; a conductive polymer such as a polyphenylene derivative and the like, or a mixture thereof.

The negative electrode current collector may be selected from a copper foil, a nickel foil, a stainless steel foil, a titanium foil, a nickel foam, a copper foam, a polymer substrate coated with a conductive metal, and a combination thereof.

The rechargeable lithium battery may further comprise a separator between the negative electrode and the positive electrode, depending on a type of the rechargeable lithium battery. These separators are porous substrates; or it may be a composite porous substrate.

The porous substrate may be a substrate comprising pores, and lithium ions may move through the pores. The

porous substrate may be for example may comprise polyethylene, polypropylene, polyvinylidene fluoride, and multi-layers thereof such as a polyethylene/polypropylene double-layered separator, a polyethylene/polypropylene/polyethylene triple-layered separator, and a polypropylene/polyethylene/polypropylene triple-layered separator.

The composite porous substrate may have a form comprising a porous substrate and a functional layer on the porous substrate. The functional layer may be, for example, at least one of a heat-resistant layer and an adhesive layer from the viewpoint of enabling additional function. For example, the heat-resistant layer may comprise a heat-resistant resin and optionally a filler.

In addition, the adhesive layer may comprise an adhesive resin and optionally a filler.

The filler may be an organic filler or an inorganic filler.

Referring to FIG. 1, a rechargeable lithium battery 100 according to embodiments comprises a battery cell comprising a negative electrode 112, a positive electrode 114 facing the negative electrode 112, a separator 113 interposed between the negative electrode 112 and the positive electrode 114, and an electrolyte (not shown) impregnating the negative electrode 112, the positive electrode 114, and the separator 113, a battery case 120 housing the battery cell, and a sealing member 140 sealing the battery case 120.

Hereinafter, examples of the present invention and comparative examples are described. These examples, however, are not in any sense to be interpreted as limiting the scope of the invention.

## Preparation of Electrolyte for Rechargeable Lithium Battery

### Preparation Example 1

As a non-aqueous organic solvent, a carbonate based solvent prepared by mixing ethylene carbonate (EC): ethylmethyl carbonate (EMC): dimethyl carbonate (DMC) = 20:10:70 in a volume ratio was used.

The non-aqueous organic solvent was mixed with a 1.5 M lithium salt ($LiPF_6$), and 0.2 wt% of a sodium imide salt (NaFSI) as an additive was added thereto, finally obtaining an electrolyte for a rechargeable lithium battery.

Herein, a content (wt%) of the sodium imide salt means a content of the sodium imide salt (wt%) based on 100 wt% of the electrolyte for a rechargeable lithium battery. This will be the same as below.

### Preparation Example 2

An electrolyte for a rechargeable lithium battery was prepared in the same manner as in Preparation Example 1 except that 0.25 wt% of a sodium imide salt (NaFSI) as the additive was used.

### Preparation Example 3

An electrolyte for a rechargeable lithium battery was prepared in the same manner as in Preparation Example 1 except that 0.3 wt% of a sodium imide salt (NaFSI) as the additive was used.

### Preparation Example 4

An electrolyte for a rechargeable lithium battery was prepared in the same manner as in Preparation Example 1 except that 0.5 wt% of a sodium imide salt (NaFSI) as the additive was used.

### Preparation Example 5

An electrolyte for a rechargeable lithium battery was prepared in the same manner as in Preparation Example 1 except that 1.0 wt% of a sodium imide salt (NaFSI) as the additive was used.

### Preparation Example 6

An electrolyte for a rechargeable lithium battery was prepared in the same manner as in Preparation Example 1 except that 0.25 wt% of a sodium imide salt (NaTFSI) as the additive was used.

### Preparation Comparative Example 1

An electrolyte for a rechargeable lithium battery was prepared in the same manner as in Preparation Example 1 except that the additive was not added at all.

## Preparation Comparative Example 2

An electrolyte for a rechargeable lithium battery was prepared in the same manner as in Preparation Example 1 except that 0.2 wt% of a sodium phosphate salt ($NaPF_6$) as the additive was used.

## Preparation Comparative Example 3

An electrolyte for a rechargeable lithium battery was prepared in the same manner as in Preparation Example 1 except that 0.15 wt% of a sodium imide salt (NaFSI) as the additive was used.

## Preparation Comparative Example 4

An electrolyte for a rechargeable lithium battery was prepared in the same manner as in Preparation Example 1 except that 1.15 M lithium salt ($LiPF_6$) was used instead of the 1.5 M lithium salt ($LiPF_6$), and about 8.5 wt% of a 0.5 M sodium imide salt (NaFSI) was used instead of 0.02 wt% of the sodium imide salt (NaFSI) as the additive.

## Manufacture of Rechargeable Lithium Battery Cell

### Example 1

(1) Manufacture of Positive Electrode

$LiNi_{0.88}Co_{0.07}Al_{0.05}O_2$ as a positive electrode active material, polyvinylidene fluoride as a binder, and ketjen black as a conductive material were mixed respectively in a weight ratio of 97:2:1, and then, dispersed in N-methyl pyrrolidone to prepare positive electrode active material slurry.
The positive electrode active material slurry was coated on a 14 μm-thick Al foil, dried at 110 °C, and pressed to manufacture a positive electrode.

(2-1) Manufacture of Negative Electrode (if manufacturing full-cell)

A mixture of artificial graphite and Si-C composite in a weight ratio of 93:7 was prepared as a negative electrode active material, and the negative electrode active material, a styrene-butadiene rubber binder, and carboxylmethyl cellulose in a weight ratio of 97:1:2 were dispersed in distilled water to prepare negative electrode active material slurry.
The Si-C composite included a core comprising artificial graphite and silicon particles and coal pitch coated on the surface of the core.
The negative electrode active material slurry was coated on a 10 μm-thick Cu foil, dried at 100 °C, and pressed to manufacture a negative electrode.

(2-2) Manufacture of Negative Electrode (if manufacturing half-cell)

As a negative electrode, which is a counter electrode, 10 μm-thick Li metal was used.

(3) Manufacture of Rechargeable Lithium Battery Cell

The manufactured positive and negative electrodes and a polyethylene separator having a thickness of 25 μm were assembled to manufacture an electrode assembly, and the electrolyte for a rechargeable lithium battery of Preparation Example 1 was injected to prepare a rechargeable lithium battery cell.

### Example 2

A rechargeable lithium battery cell was manufactured in the same as in Example 1 except that the electrolyte for a rechargeable lithium battery of Preparation Example 2 was injected.

### Example 3

A rechargeable lithium battery cell was manufactured in the same as in Example 1 except that the electrolyte for a rechargeable lithium battery of Preparation Example 3 was injected.

**Example 4**

A rechargeable lithium battery cell was manufactured in the same as in Example 1 except that the electrolyte for a rechargeable lithium battery of Preparation Example 4 was injected.

**Example 5**

A rechargeable lithium battery cell was manufactured in the same as in Example 1 except that the electrolyte for a rechargeable lithium battery of Preparation Example 5 was injected.

**Example 5**

A rechargeable lithium battery cell was manufactured in the same as in Example 1 except that the electrolyte for a rechargeable lithium battery of Preparation Example 6 was injected.

**Comparative Example 1**

A rechargeable lithium battery cell was manufactured in the same as in Example 1 except that the electrolyte for a rechargeable lithium battery of Preparation Comparative Example 1 was injected.

**Comparative Example 2**

A rechargeable lithium battery cell was manufactured in the same as in Example 1 except that the electrolyte for a rechargeable lithium battery of Preparation Comparative Example 2 was injected.

**Comparative Example 3**

A rechargeable lithium battery cell was manufactured in the same as in Example 1 except that the electrolyte for a rechargeable lithium battery of Preparation Comparative Example 3 was injected.

**Comparative Example 4**

A rechargeable lithium battery cell was manufactured in the same as in Example 1 except that the electrolyte for a rechargeable lithium battery of Preparation Comparative Example 4 was injected.

**Evaluation 1: Evaluation of Precipitates at the Interface between the Negative Electrode and Electrolyte**

The rechargeable lithium battery half-cells according to Examples 1 to 6 and Comparative Examples 1 to 4 were CC-charged at 1 C to SOC 80% and discharged at 0.1 C and then, measured with respect to a precipitation amount of lithium dendrite according to Equation 1, and the results are shown in Table 1:

[Equation 1]

Lithium dendrite precipitation amount (%) = 100 * (lithium dendrite amount after discharging under the above conditions) / (lithium charge amount at SOC 100% (full charge))

(Table 1)

| | Lithium dendrite precipitation amount [%] |
|---|---|
| Comparative Example 1 | 1.53 |
| Comparative Example 2 | 1.43 |
| Comparative Example 3 | 1.43 |

(continued)

| | Lithium dendrite precipitation amount [%] |
|---|---|
| Comparative Example 4 | 2.05 |
| Example 1 | 1.21 |
| Example 2 | 1.18 |
| Example 3 | 1.20 |
| Example 4 | 1.21 |
| Example 5 | 1.21 |
| Example 6 | 1.30 |

Referring to Table 1, Examples 1 to 6, compared with Comparative Examples 1, 3, and 4, were suppressed from precipitation of lithium dendrite on the surface of a negative electrode and an electrolyte, which was helpful for rapid charging.

**Evaluation 2: Evaluation of DC Resistance increase Rate during Rapid Charging**

The rechargeable lithium battery full cells of Examples 1 to 6 and Comparative Examples 1 to 4 were evaluated under the following conditions, and the results are shown in Table 2.

The cells were constant current-charged to a voltage of 4.2 V at a current rate of 2.0 C to 3.0 C at 25 °C. Subsequently, the cells were constant current-discharged to a voltage of 2.8 V at a rate of 0.5 C, wherein this charge and discharge cycle was 300 times repeated (300th cycles). In all the charge and discharge cycles, a pause of 10 minutes was set after every charge/discharge cycle. After the 300 charge and discharge cycles, the cells were measured with respect to resistance, which was used to calculate a DC-IR increase rate (%) according to Equation 1.

[Equation 1]

DC-IR increase rate during rapid charging = DC-IR (300 charge/discharge cycles)/DCIR (0d.) X 100%

In Equation 1, DC-IR (300 charge and discharge cycles) represents DCIR after 60 charge and discharge cycles at 25 °C, and DC-IR (0d.) represents DC-IR right before the 300 charge and discharge cycles.

(Table 2)

| | Resistance increase rate after rapid charging 300 cycles [%, @25 °C] |
|---|---|
| Comparative Example 1 | 12.9 |
| Comparative Example 2 | 10.2 |
| Comparative Example 3 | 9.95 |
| Comparative Example 4 | 25.0 |
| Example 1 | 9.05 |
| Example 2 | 4.00 |
| Example 3 | 4.13 |
| Example 4 | 4.20 |
| Example 5 | 4.20 |
| Example 6 | 6.30 |

Referring to Table 2, Examples 1 to 6, compared with Comparative Examples 1 to 4, were suppressed from

resistance increase during the rapid charging and thus exhibited improved rapid charging cycle life.

## Evaluation 3: Evaluation of Rapid Charging Time

The rechargeable lithium battery cells of Examples 1 to 6 and Comparative Examples 1 to 4 were evaluated under the following conditions, and the results are shown in Table 3.

Time to reach SOC 80% or SOC 100% (full charge), if CC-CV charged (4.2 V) at a current of 1 C at 25 °C, was measured.

(Table 3)

| | Time to reach 80% rapid charging SOC [min, @25 °C] | Time to reach 100% rapid charging SOC [min, @25 °C] |
|---|---|---|
| Comparative Example 1 | 40.1 | 57.0 |
| Comparative Example 2 | 40.3 | 57.3 |
| Comparative Example 3 | 41.0 | 56.9 |
| Comparative Example 4 | 49.0 | 61.0 |
| Example 1 | 38.0 | 56. |
| Example 2 | 36.5 | 54.3 |
| Example 3 | 37.0 | 55.0 |
| Example 4 | 37.1 | 56.0 |
| Example 5 | 38.0 | 56.5 |
| Example 6 | 36.5 | 56.0 |

Referring to Table 3, Examples 1 to 6, compared with Comparative Examples 1 to 4, were suppressed from resistance increase during the rapid charging and also, exhibited improved rapid charging time.

While this invention has been described in connection with what is presently considered to be practical example embodiments, it is to be understood that the invention is not limited to the disclosed embodiments, but, on the contrary, is intended to cover various modifications and equivalent arrangements included within the scope of the appended claims.

## <Description of Symbols>

100: rechargeable lithium battery
112: negative electrode
113: separator
114: positive electrode
120: battery case
140: sealing member

## Claims

1. An electrolyte for a rechargeable lithium battery, comprising
a non-aqueous organic solvent, a lithium salt, and a sodium imide salt, wherein a content of the sodium imide salt is greater than or equal to about 0.2 wt% based on 100 wt% of the electrolyte for a rechargeable lithium battery.

2. The electrolyte as claimed in claim 1, wherein
the content of the sodium imide salt is about 0.2 to about 1.0 wt% based on 100 wt% of the electrolyte for a rechargeable lithium battery; OR the content of the sodium imide salt is about 0.25 to about 0.3 wt% based on 100 wt% of the electrolyte for a rechargeable lithium battery.

3. The electrolyte as claimed in claim 1 or claim 2, wherein the sodium imide salt is NaFSI, NaTFSI, NaFTFSI (sodium (fluorosulfonyl) (trifluoromethanesulfonyl) imide), or a combination thereof.

4. The electrolyte according to any one as claimed in claims 1 to 3, wherein the non-aqueous organic solvent comprises a carbonate-based, ester-based, ether-based, ketone-based, alcohol-based, or aprotic solvent.

5. The electrolyte as claimed in claim 4, wherein

the non-aqueous organic solvent comprises cyclic carbonate and linear carbonate in a volume ratio of about 5:95 to about 50:50;
OR
the non-aqueous organic solvent comprises cyclic carbonate and linear carbonate in a volume ratio of about 5:95 to about 50:50, wherein the cyclic carbonate comprises ethylene carbonate (EC), and the linear carbonate comprises ethylmethyl carbonate (EMC), and dimethyl carbonate (DMC).

6. The electrolyte according to any one as claimed in claims 1 to 5, wherein the lithium salt comprise one or two or more selected from $LiPF_6$, $LiBF_4$, LiDFOP, LiDFOB, $LiPO_2F_2$, $LiSbF_6$, $LiAsF_6$, $LiN(SO_2C_2F_5)_2$, $Li(CF_3SO_2)_2N$, $LiN(SO_3C_2F_5)_2$, $Li(FSO_2)_2N$ (lithium bis(fluorosulfonyl)imide, LiFSI), $LiC_4F_9SO_3$, $LiClO_4$, $LiAlO_2$, $LiAlCl_4$, $LiN(C_xF_{2x+1}SO_2)(C_yF_{2y+1}SO_2)$ (where x and y are integers from 1 to 20), LiCl, LiI, and $LiB(C_2O_4)_2$ (lithium bis(oxalato) borate: LiBOB); optionally wherein a concentration of the lithium salt in the electrolyte for a rechargeable lithium battery is about 1.0 M to about 2.0 M.

7. A rechargeable lithium battery, comprising

a positive electrode comprising a positive electrode active material;
a negative electrode comprising a negative electrode active material; and
the electrolyte of any one as claimed in claims 1 to 6.

8. The rechargeable lithium battery as claimed in claim 7, wherein the positive electrode active material comprises a lithium nickel-based composite oxide represented by Chemical Formula 1:

[Chemical Formula 1] $$Li_{a1}Ni_{x1}M^1_{y1}M^2_{z1}O_{2-b1}X_{b1}$$

wherein, in Chemical Formula 1,

$0.9 \le a1 \le 1.2$, $0.7 \le x1 \le 1$, $0 \le y1 \le 0.2$, $0 \le z1 \le 0.2$, $0.9 \le x1+y1+z1 \le 1.1$, and $0 \le b1 \le 0.1$;
$M^1$ and $M^2$ are each independently one or more elements selected from Al, B, Ba, Ca, Ce, Co, Cr, Cu, Fe, Mg, Mn, Mo, Nb, Si, Sr, Ti, V, W, and Zr; and
X is one or more elements selected from F, P, and S.

9. The rechargeable lithium battery as claimed in claim 7 or 8, wherein the negative electrode active material comprises at least one of graphite and a Si composite.

10. The rechargeable lithium battery as claimed in claim 9, wherein the Si composite comprises a core comprising Si particles and amorphous carbon.

11. The rechargeable lithium battery as claimed in claim 10, wherein the core comprising the Si particles comprises one or more of a Si-C composite, $SiO_k$ ($0 < k \le 2$), and a Si alloy.

12. The rechargeable lithium battery as claimed in claim 11, wherein the Si-C composite comprises a core comprising Si particles and amorphous carbon.

13. The rechargeable lithium battery as claimed in claim 12, wherein pores are comprised in the central portion of the core.

**14.** The rechargeable lithium battery as claimed in claim 13, wherein

a radius of the central portion corresponds to 30% to 50% of a radius of the SiC composite, and an average particle diameter of the Si particles is about 10 nm to about 200 nm.
AND/OR
the central portion does not comprise amorphous carbon, and the amorphous carbon exists in the surface portion alone of the negative electrode active material.

**15.** The rechargeable lithium battery as claimed in claim 12, wherein
the negative electrode active material further comprises crystalline carbon.

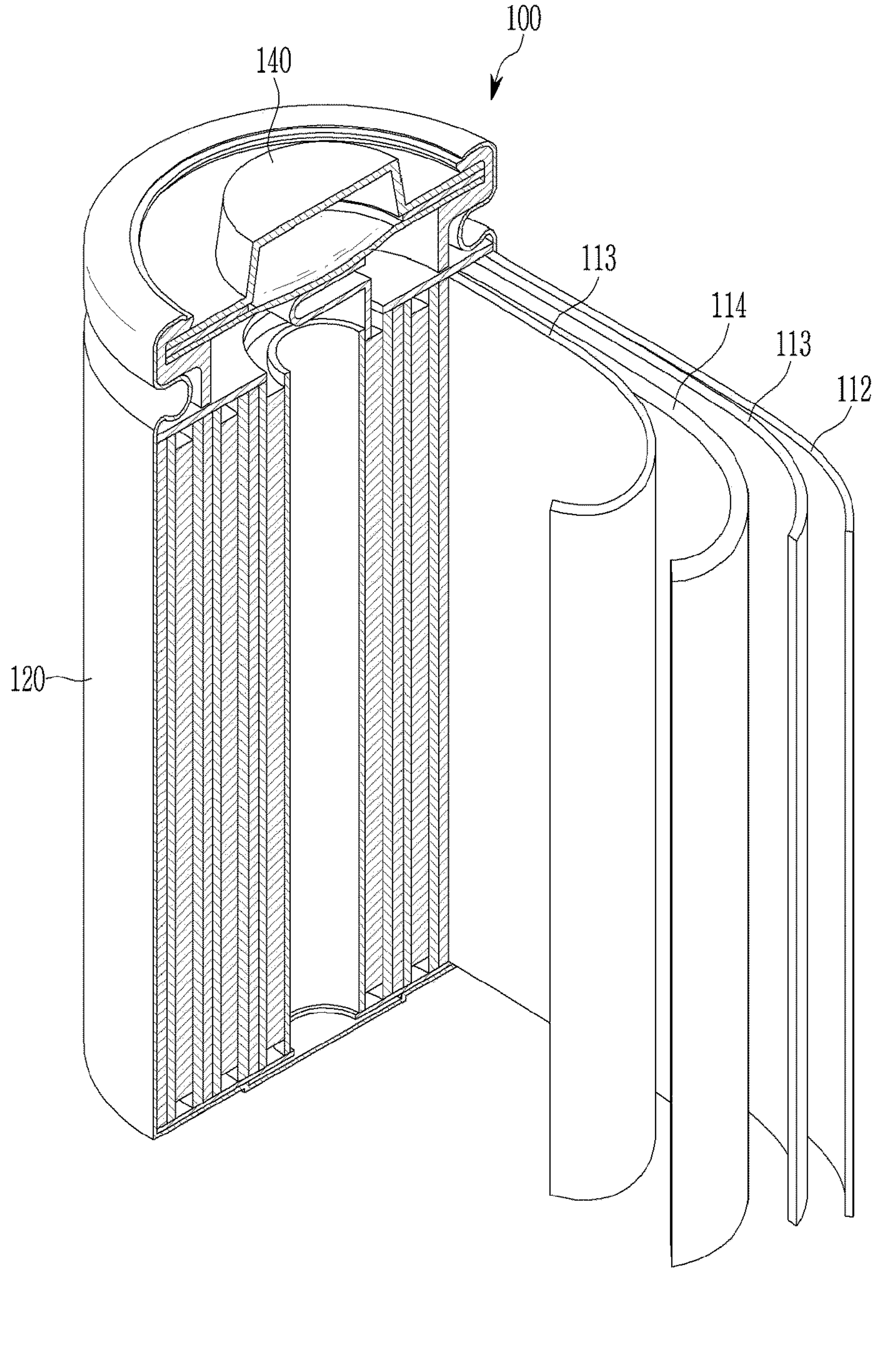


1

Europäisches Patentamt
European Patent Office
Office européen des brevets

# EUROPEAN SEARCH REPORT

Application Number
EP 23 19 4724

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br><br>Y | CN 107 507 998 A (MICROVAST POWER SYSTEMS HUZHOU CO LTD)<br>22 December 2017 (2017-12-22)<br>* examples 17, 18 *<br>----- | 1-7,9<br><br><br>8,10-15 | INV.<br>H01M10/0525<br>H01M10/0568 |
| X | JP 2022 181365 A (TDK CORP)<br>8 December 2022 (2022-12-08)<br>* Par. 87-91 *<br>----- | 1,3-7 | |
| X | CN 109 494 406 B (NINGBO INST MATERIALS TECH & ENG CAS)<br>2 November 2021 (2021-11-02)<br>* example 1 *<br>----- | 1,3,4,6,7 | |
| Y | CN 110 931 763 A (GUANGDONG INST RARE METALS) 27 March 2020 (2020-03-27)<br>* Examples *<br>----- | 8 | |
| Y | WO 2022/220474 A1 (SAMSUNG SDI CO LTD [KR]) 20 October 2022 (2022-10-20)<br>* par. 43-48; example 1 *<br>----- | 8,10-15 | |

| TECHNICAL FIELDS SEARCHED (IPC) |
|---|
| H01M |

The present search report has been drawn up for all claims

| Place of search | Date of completion of the search | Examiner |
|---|---|---|
| Munich | 30 January 2024 | Bettio, Andrea |

2

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# ANNEX TO THE EUROPEAN SEARCH REPORT ON EUROPEAN PATENT APPLICATION NO. EP 23 19 4724

This annex lists the patent family members relating to the patent documents cited in the above-mentioned European search report.
The members are as contained in the European Patent Office EDP file on
The European Patent Office is in no way liable for these particulars which are merely given for the purpose of information.

30-01-2024

| Patent document cited in search report | Publication date | Patent family member(s) | Publication date |
|---|---|---|---|
| CN 107507998 A | 22-12-2017 | NONE | |
| JP 2022181365 A | 08-12-2022 | NONE | |
| CN 109494406 B | 02-11-2021 | NONE | |
| CN 110931763 A | 27-03-2020 | NONE | |
| WO 2022220474 A1 | 20-10-2022 | CN 116472631 A | 21-07-2023 |
| | | EP 4210143 A1 | 12-07-2023 |
| | | KR 20230175176 A | 29-12-2023 |
| | | WO 2022220474 A1 | 20-10-2022 |

EPO FORM P0459

For more details about this annex : see Official Journal of the European Patent Office, No. 12/82